# EUROPÄISCHE PATENTANMELDUNG

(11) **EP 1 079 659 A1**
(43) Veröffentlichungstag der Anmeldung: **28.02.2001**
(21) Anmeldenummer: 99116507.7
(22) Anmeldetag: 23.08.1999
(51) Int. Cl.: H04Q 11/04

(54) **Verfahren zum Überprüfen einer Vermittlungsstelle, und Anschlusseinheit, Vermittlungsstelle und Computerprogramm dafür**

(71) Anmelder: SIEMENS AKTIENGESELLSCHAFT, 80333 München (DE)
(72) Erfinder: Eder, Michael, Dipl.-Ing., 83564 Soyen (DE); Leutner, Klaus, 82008 Unterhaching (DE); Riedel, Siegmar, 80637 München (DE); Zittinger, Burkhard, 81479 München (DE)

(57) **Zusammenfassung**

Erläutert wird ein Verfahren zum Überprüfen einer Vermittlungsstelle, bei dem Verweisdaten im Speicher der Vermittlungsstelle überprüft werden. Ein Prozessor ermittelt an Hand von Zustandsdaten den Betriebszustand von Programmen, welche die Verweisdaten verwenden (Schritt 408). Dazu wird das entsprechende Verweisdatum gelesen (Schritte 410, 416). Falls das Verweisdatum einen für den ermittelten Betriebszustand unzulässigen Wert hat, wird eine Fehlerbehandlung durchgeführt (Schritte 412, 414).

## Beschreibung

Die Erfindung betrifft ein Verfahren zum Überprüfen einer Vermittlungsstelle. In der Vermittlungsstelle werden beim Ausführen von Anwendungsprogrammen vermittlungstechnische Vorgänge durchgeführt. Ein solcher vermittlungstechnischer Vorgang ist z.B. die Signalisierung für einen ersten Teilnehmer. Weitere vermittlungstechnische Vorgänge betreffen die Verbindungssteuerung beim Auf- und Abbau einer Verbindung zwischen dem ersten Teilnehmer und einem zweiten Teilnehmer. Der Ablauf der Anwendungsprogramme wird von einem Betriebssystem gesteuert, das als Bindeglied zwischen Anwendungsprogrammen und elektronischen Bauelementen des Rechners dient. Das Betriebssystem steuert verschiedene Betriebsfunktionen des Rechners und übernimmt zentrale Aufgaben, wie z.B. die Speicherverwaltung und die Geräteansteuerung.

Ein bisher verwendetes Anwendungsprogramm führt sowohl die Signalisierung als auch die Verbindungssteuerung aus. Dabei werden Signalisierungsdaten und Verbindungsdaten bearbeitet. Aufgrund seiner Größe ist das bisher für die Signalisierung und die Verbindungssteuerung verwendete Anwendungsprogramm schwer überschaubar. Daraus resultiert ein hoher Aufwand beim Erstellen und Warten des Anwendungsprogramms. Außerdem wird bisher für jedes Übertragungsprotokoll, das an einem Teilnehmeranschluß oder einer Zwischenamtssignalisierung auftreten kann, ein eigenes Anwendungsprogramm verwendet. Dies erschwert das Erstellen und Warten der Anwendungsprogramme ebenfalls.

Die Anwendungsprogramme lassen sich jedoch auf einfache Art erstellen und warten, wenn ein Signalisierungsprogramm zur Signalisierung und ein Verbindungsprogramm zur Verbindungssteuerung verwendet werden. Hierbei sind Signalisierungsprogramm und Verbindungsprogramm verschiedene Programme, die jeweils eigenständig programmiert und getestet werden. Beide Programme senden sich gegenseitig mit Hilfe des Betriebssystems Nachrichten. In der Vermittlungsstelle gibt es für jeden sprechenden Teilnehmer ein Signalisierungsprogramm. Beim Abarbeiten der Signalisierungsprogramme kann auf dieselbe Befehlsfolge zugegriffen werden. Man spricht in diesem Zusammenhang auch von Inkarnationen des Signalisierungsprogramms. Auch vom Verbindungsprogramm kann es mehrere Inkarnationen geben.

Jedes Signalisierungsprogramm greift auf einen zugehörigen Signalisierungsdatensatz zu. Der Signalisierungsdatensatz enthält unter anderem ein Zustandsdatum, das den Betriebszustand des zugreifenden Signalisierungsprogramms angibt. Ebenso gehört zu jedem Verbindungsprogramm ein Verbindungsdatensatz, auf den das jeweilige Verbindungsprogramm zugreift.

Beim Aufbau und Abbau einer Verbindung zwischen zwei Teilnehmern arbeitet ein Signalisierungsprogramm mit einem Partner-Verbindungsprogramm zusammen. Deshalb enthält beispielsweise der Signalisierungsdatensatz mindestens ein Verweisdatum auf den Partner-Verbindungsdatensatz.

Im störungsfreien Betrieb gibt es keine Zuordnungsprobleme zwischen den Signalisierungsdatensätzen und den Signalisierungsprogrammen einerseits sowie den Verbindungsdatensätzen und den Verbindungsprogrammen andererseits. Es sind auch keine Maßnahmen bekannt, um die Zuordnung zu überprüfen. Jedoch kann es durch Fehler bei der Programmierung und bei Betriebsstörungen der Vermittlungsstelle zu falschen oder ungültigen Zuordnungen kommen.

Aufgabe der Erfindung ist es, ein einfaches Verfahren anzugeben, mit dem die Vermittlungsstelle und insbesondere die Zuordnung der Datensätze zu den Programmen überprüft werden kann. Außerdem ist es Aufgabe der Erfindung, eine Anschlußeinheit und eine Vermittlungsstelle sowie ein zugehöriges Computerprogramm anzugeben, mit denen das Verfahren zur Überprüfung ausgeführt werden kann.

Die das Verfahren betreffende Aufgabe wird durch die im Patentanspruch 1 angegebenen Verfahrensschritte gelöst. Weiterbildungen sind in den Unteransprüchen angegeben.

Beim erfindungsgemäßen Verfahren wird ausgehend vom Zustandsdatum des Signalisierungsdatensatzes der Betriebszustand des zugreifenden Signalisierungsprogrammes ermittelt. Außerdem wird das Verweisdatum des Signalisierungsdatensatzes gelesen. Falls das Verweisdatum einen für den ermittelten Betriebszustand unzulässigen Wert hat, wird eine Fehlerbehandlung durchgeführt. Durch diese Maßnahme wird gewährleistet, daß eine fehlerhafte Zuordnung von Signalisierungsdatensatz und Signalisierungsprogramm frühzeitig erkannt wird. Späteren Folgefehlerfällen kann vorgebeugt werden. Außerdem wird es möglich, den durch fehlerhafte Zuordnungen in der Vermittlungsstelle belegten Speicherplatz wieder freizugeben.

Bei einer Weiterbildung werden die genannten Schritte beim Abarbeiten eines Überprüfungsprogramms durchgeführt, das nicht Bestandteil des Signalisierungs- oder Verbindungsprogramms ist. Die Überprüfung der Vermittlungsstelle wird durch dies Maßnahme unabhängig vom Zustand der Signalisierungs-bzw. Verbindungsprogramme durchgeführt. Das Überprüfungsprogramm wird beispielsweise zu Zeiten gestartet, in denen die Vermittlungsstelle nicht ausgelastet ist.

Bei einer anderen Weiterbildung enthält der Verbindungsdatensatz ein Zustandsdatum, das den Zustand des zugreifenden Verbindungsprogramms angibt. Damit das Verbindungsprogramm das Partner-Signalisierungsprogramm ermitteln kann, mit dem es zusammenarbeitet, enthält der Verbindungsdatensatz ein Verweisdatum, das auf den Signalisierungsdatensatz verweist, auf den das Partner-Signalisierungsprogramm zugreift. Jedoch kann das Verweisdatum auch auf einen anderen Verbindungsdatensatz verweisen, auf den ein anderes Verbindungsprogramm zugreift, mit dem ebenfalls zusammengearbeitet wird. Die obengenannten Schritte zur Überprüfung der Zuordnung werden auch mit den Daten des Verbindungsdatensatzes ausgeführt. Somit lassen sich auch Zuordnungsfehler zwischen Verbindungsdatensätzen und Verbindungsprogrammen feststellen.

Werden die Schritte für jeden Signalisierungsdatensatz und jeden Verbindungsdatensatz durchgeführt, so erfolgt eine vollständige Überprüfung. Die Überprüfung wird vorzugsweise zyklisch durchgeführt, so daß nach dem Überprüfen aller Datensätze wieder mit der Überprüfung des ersten Datensatzes begonnen wird. Das Überprüfen erfolgt entweder ohne Unterbrechung des Zyklus oder mit Unterbrechungen, in denen der Prozessor andere Aufgaben übernehmen kann, zum Beispiel Vermittlungsaufgaben.

In einer Ausgestaltung der Erfindung gibt ein vorgegebener Wert des Zustandsdatums einen Ruhezustand an, in welchem das zugreifende Programm nicht abgearbeitet wird. Wird ein Datensatz gefunden, in dem das Zustandsdatum den Wert für den Ruhezustand hat, so ist für das Verweisdatum nur ein vorgegebener Verweiswert zulässig, der angibt, daß kein Verweis vorliegt. Ein solcher Verweiswert ist zum Beispiel der Verweiswert Null. Mann spricht in diesem Zusammenhang auch von einem Null-Zeiger, da der Verweiswert auf keinen gültigen Datensatz zeigt. Zuordnungsfehler lassen sich leicht daran erkennen, daß das Verweisdatum im Ruhezustand einen vom vorgegebenen Verweiswert abweichenden Wert hat. Andererseits kann bei vom Ruhezustand abweichendem Betriebszustand eine fehlerhafte Zuordnung auf einfache Weise daran erkannt werden, daß der Verweiswert beispielsweise nicht auf den Beginn eines Datensatzes zeigt.

Bei einer anderen Ausgestaltung der Erfindung wird bei der Fehlerbehandlung eine Fehlermeldung in eine Fehlerdatei eingetragen. Anhand der Fehlermeldung kann das Bedienpersonal den Fehler zu einem späterem Zeitpunkt beseitigen. Werden die Fehler automatisch beseitigt, so kann das Bedienpersonal anhand der Fehlermeldung die Ursachen für die Fehlermeldung aufdecken.

Bei bestimmten Fehlern wird bei einer anderen Weiterbildung an die Stelle des unzulässigen Verweisdatums ein zulässiges Verweisdatum in den Speicher geschrieben. Es ergibt sich eine einfache Fehlerbehandlung.

Die Erfindung betrifft außerdem eine Anschlußeinheit und eine Vermittlungsstelle sowie ein Computerprogramm, mit denen das erfindungsgemäße Verfahren ausgeführt wird. Somit gelten die oben angegebenen technischen Wirkungen auch für die Anschlußeinheit, die Vermittlungsstelle und das Computerprogramm.

Im folgenden werden Ausführungsbeispiele der Erfindung an Hand der beiliegenden Zeichnungen erläutert. Darin zeigen:
- Figur 1: eine Vermittlungsstelle mit mehreren Anschlußeinheiten,
- Figur 2: eine Anschlußeinheit mit mehreren Anschlußbaugruppen,
- Figur 3: eine Darstellung der Abläufe in der Anschlußeinheit, und
- Figur 4: einen Meldungsblock mit zugehörigem Datenblock,
- Figur 5: die Datenfelder eines Signalisierungsdatensatzes und eines Verbindungsdatensatzes,
- Figur 6: die Verkettung von Datensätzen bei einer sogenannten Dreierkonferenzschaltung und
- Figur 7: ein Flußdiagramm mit Verfahrensschritten zur Überprüfung der Verkettung der Datensätze.

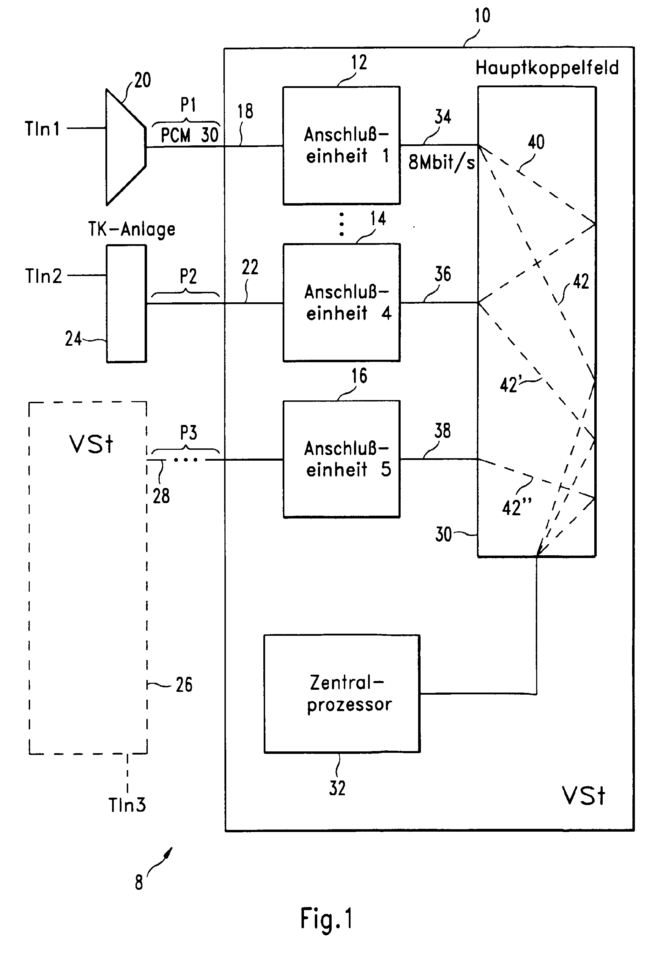

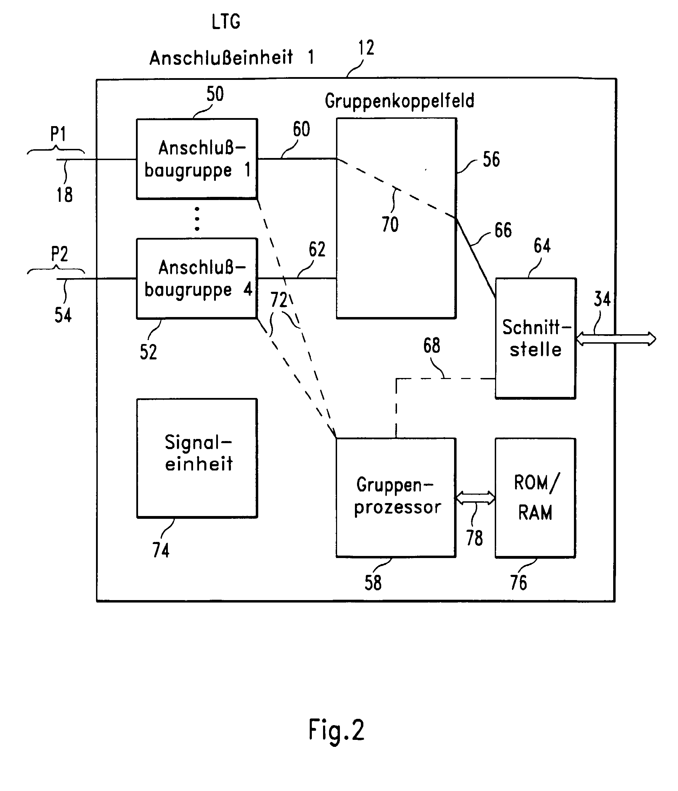

Figur 1 zeigt in einem Telekommunikationsnetz 8 eine Orts-Vermittlungsstelle 10, auch VSt abgekürzt, mit mehreren Anschlußeinheiten 12 bis 16, deren Aufbau an Hand der Anschlußeinheit 12 in Figur 2 erläutert wird. Durch Punkte sind weitere zwischen den Anschlußeinheiten 12 und 14 angeordnete Anschlußeinheiten angedeutet.

Eine Verbindungsleitung 18 verbindet die Anschlußeinheit 12 mit einer Konzentratoreinheit 20, an die eine Vielzahl von Teilnehmern angeschlossen ist, von denen in Figur 1 ein Teilnehmer Tln1 dargestellt ist. Die Konzentratoreinheit 20 bündelt einerseits die von den Teilnehmern kommenden Leitungen so, daß für die Übertragung der Sprachdaten zur Vermittlungsstelle 10 nur eine Leitung 18 verwendet werden muß. Andererseits teilt die Konzentratoreinheit 20 die über die Leitung 18 empfangenen Sprachdaten auf die Anschlußleitungen der Teilnehmer auf. Auf der Verbindungsleitung 18 wird ein PCM30-System (PCM=Pulse Code Modulation) verwendet, d.h. es stehen 30 Sprachkanäle zur Verfügung. Die Übertragung der PCM-Sprachdaten erfolgt nach einem ersten Protokoll P1, das ein SIEMENS-internes Protokoll ist. Als Protokoll P1 werden aber auch standardisierte Protokolle verwendet, z.B. die Protokolle MULDEX, V51 oder V52. Auf der Verbindungsleitung 18 können auch mehrere PCM30-Systeme oder auch PCM24-Systeme mit 24 Sprachkanälen verwendet werden.

Eine Verbindungsleitung 22 verbindet die Anschlußbaugruppe 14 mit einer Telekommunikationsanlage 24. Die Telekommunikationsanlage 24 ermöglicht es z.B. einer Firma innerhalb ihres Privatgeländes einen internen Kommunikationsverkehr zu vermitteln, bzw. Verbindungen nach außen aufzubauen. Einer der an der Telekommunikationsanlage 24 angeschlossenen Teilnehmer ist in Figur 1 als Teilnehmer Tln2 dargestellt. Die Übertragung der Sprachdaten erfolgt zwischen der TelekommunikationsAnlage 24 und der Anschlußeinheit 14 gemäß einem Protokoll P2, das sich vom Protokoll P1 unterscheidet.

Die Anschlußeinheit 16 ist mit einer weiteren Vermittlungsstelle 26 über eine Verbindungsleitung 28 verbunden. Die Übertragung von Sprach- und Signalisierungsdaten auf der Verbindungsleitung 28 erfolgt gemäß einem Protokoll P3, das aus Protokollen ausgewählt wurde, die speziell für die Verbindung zweier Vermittlungsstellen ausgelegt sind. Eine Verbindung vom Teilnehmer Tln1 zu einem an die Vermittlungsstelle 26 angeschlossenen Teilnehmer Tln3 wird mittels der Anschlußeinheit 16 aufgebaut.

Die Vermittlungsstelle 10 enthält weiterhin ein Haupt-Koppelfeld 30 sowie einen Zentralprozessor 32. Sämtliche Anschlußeinheiten 12 bis 16 sind mit dem Koppelfeld 30 über Verbindungsleitungen 34 bis 38 verbunden. Jede Verbindungsleitung 34 bis 38 hat eine Übertragungskapazität von acht MBit pro Sekunde, so daß jeweils Sprach- bzw. Steuerungsdaten über 128 Übertragungskanäle übertragen werden können. Der Zentralprozessor 32 steuert das Schalten von Verbindungen im Koppelfeld 30. Beispielsweise schaltet der Zentralprozessor 32 einen Sprachkanal 40, über den der Teilnehmer Tln1 mit dem Teilnehmer Tln2 sprechen kann. Ein Meldungskanal 42 wird vorher von der Anschlußeinheit 12 verwendet, um dem Zentralprozessor 32 mitzuteilen, daß der Teilnehmer Tln1 eine Verbindung zum Teilnehmer Tln2 aufbauen möchte. Nach Durchschalten der Verbindung werden weitere Steuerdaten zwischen den Anschlußeinheiten 12 bis 16 und dem Zentralprozessor über den Meldungskanal 42 bzw. über Meldungskanäle 42', 42'' ausgetauscht.

Die in Fig. 1 dargestellte Anschlußeinheit 16 wird für die Signalisierung zwischen den Vermittlungsstellen 10 und 26 verwendet. In den Anschlußeinheiten 12, 14 und 16 gibt es Signalisierungsprogramme und Verbindungsprogramme, die jeweils über eine Meldungsschnittstelle Daten austauschen.

Figur 2 zeigt den Aufbau der Anschlußeinheit 12, in der vier Anschlußbaugruppen enthalten sind, von denen in Figur 2 zwei Anschlußbaugruppen 50 und 52 dargestellt sind. An der Anschlußbaugruppe 50 ist die Verbindungsleitung 18 angeschlossen. Die Anschlußbaugruppe 50 ist in der Lage, gemäß Protokoll P1 zu arbeiten.

An der Anschlußbaugruppe 52 ist eine Leitung 54 angeschlossen, die zu einer nicht dargestellten weiteren Telekommunikationsanlage führt. Das zur Übertragung über die Verbindungsleitung 54 verwendete Protokoll ist das Protokoll P2. Die Anschlußbaugruppe 52 ist in der Lage gemäß Protokoll P2 für Telekommunikationsanlagen zu arbeiten.

Die Anschlußeinheit 12 enthält weiterhin ein Gruppen-Koppelfeld 56 und einen Gruppen-Prozessor 58. Die Anschlußbaugruppen 50 bis 52 sind über Verbindungsleitungen 60 bis 62 mit dem Gruppen-Koppelfeld 56 verbunden, so daß im Gruppen-Koppelfeld 56 Verbindungen zwischen den Anschlußeinheiten 50 bis 52 und einer Schnittstelle 64 geschaltet werden können. Die Schnittstelle 64 ist über eine Verbindungsleitung 66 mit dem Gruppen-Koppelfeld 56 und über eine Verbindungsleitung 68 mit dem Gruppen-Prozessor 58 verbunden. Auf der anderen Seite der Schnittstelle 64 ist die Verbindungsleitung 34 angeschlossen.

Die in Figur 1 dargestellte Verbindung 40 vom Teilnehmer Tln1 zum Teilnehmer Tln2 wird unter Verwendung einer Verbindung 70 im Koppelfeld 56 geschaltet. Der Übertragungskanal für die Verbindung vom Teilnehmer Tln1 zum Teilnehmer Tln2 wird somit über die Verbindungsleitung 18, die Anschlußbaugruppe 50, die Verbindungsleitung 60, die Verbindung 70, die Verbindungsleitung 66, die Schnittstelle 64 und die Verbindungsleitung 34 geschaltet.

Die Anschlußbaugruppen 50 bis 52 sind über ein Bussystem 72 mit dem Gruppen-Prozessor 58 verbunden. Der Gruppen-Prozessor 58 kann über das Bussystem 72 das Schalten von Verbindungen im Gruppen-Koppelfeld 56 steuern.

Die Anschlußeinheit 12 enthält außerdem eine Signaleinheit 74, die unter anderem einen Tongenerator, einen Rufstromgenerator, einen Zählimpulsgeber und einen Doppelton-Selektivruf-Empfänger (DTMF-Dual Tone Multifrequency) enthält. Die Signaleinheit 74 ist über nicht dargestellte Verbindungen mit den Anschlußbaugruppen 50, 52, dem Gruppen-Koppelfeld 56 und mit dem Gruppen-Prozessor 58 verbunden.

In der Anschlußeinheit 12 ist außerdem eine Speichereinheit 76 enthalten, die über einen Bus 78 mit dem Gruppen-Prozessor 58 verbunden ist. In der Speichereinheit 76 sind Signalisierungs- und Verbindungsprogramme gespeichert, bei deren Abarbeitung durch den Gruppenprozessor 58, die Signalisierung und die Verbindungssteuerung realisiert werden.

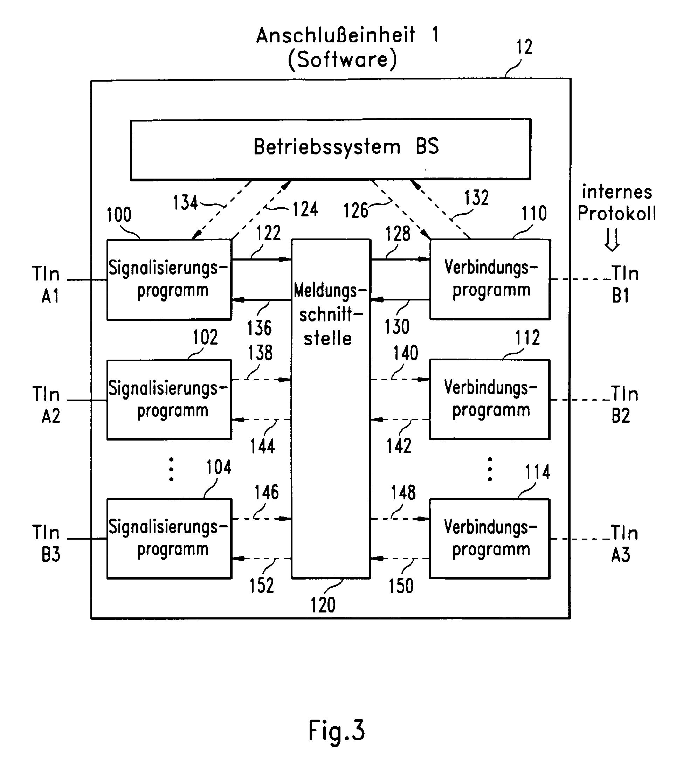

Figur 3 zeigt in der Anschlußeinheit 12 auftretende Abläufe. Beim Abarbeiten der Befehle eines ebenfalls im Speicher 76 gespeicherten Betriebssystems BS durch den Gruppen-Prozessor 58 werden die in der Anschlußeinheit 12 enthaltenen Schaltungen angesteuert, beispielsweise die Anschlußbaugruppen 50, 52 oder die Schnittstelle 64. Das Betriebssystem BS ist somit das Bindeglied zwischen den schaltungstechnischen Komponenten in der Anschlußeinheit 12 und sogenannten Anwendungsprogrammen, bei deren Abarbeiten die Anschlußeinheit 12 vermittlungstechnische Funktionen ausführt. Von diesen Anwendungsprogrammen sind in Figur 3 Signalisierungsprogramme 100 bis 104 und Verbindungsprogramme 110 bis 114 gezeigt.

Das Signalisierungsprogramm 100 wird für eine Verbindung verwendet, die ein an der Leitung 18 angeschlossener Teilnehmer TlnA1 zu einem Teilnehmer TlnB1 aufbaut. Beim Abarbeiten des Signalisierungsprogramms 100 wird die Signalisierung an der Anschlußbaugruppe 50 durchgeführt, so daß gemäß Protokoll P1 Sprachdaten und Signalisierungsdaten übertragen werden. Außerdem wird zur Verbindung des Teilnehmers TlnA1 zum Teilnehmer TlnB1 das Verbindungsprogramm 110 verwendet. Beim Abarbeiten des Verbindungsprogramms 110 wird die Verbindungssteuerung ausgeführt, d.h. der Verbindungsaufbau, die Durchschaltung des Gruppen-Koppelfeldes usw. sowie der Verbindungsabbau. Daten werden zwischen dem Signalisierungsprogramm 100 und dem Verbindungsprogramm 110 ausschließlich über eine Meldungsschnittstelle 120 ausgetauscht. Sowohl das Signalisierungsprogramm 100 als auch das Verbindungsprogramm 110 arbeiten nach dem Zustand-Anreiz-Prinzip. Das bedeutet, daß Zustände festgelegt werden, in denen bestimmte äußere Anreize definiert sind, die wiederum andere Zustände zur Folge haben. Ein Beispiel für dieses Zustand-Anreiz-Prinzip wird weiter unten erläutert. Damit das Signalisierungsprogramm 100 und das Verbindungsprogramm 110 auch untereinander nach dem Zustand-Anreiz-Prinzip arbeiten können, wird zum Datenaustausch über die Meldungsschnittstelle 120 das Betriebssystem BS herangezogen.

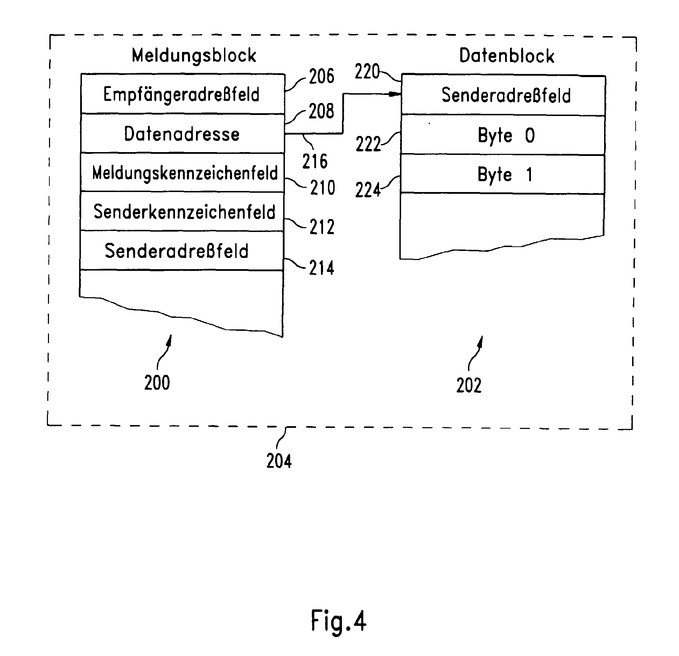

Sollen beispielsweise Daten vom Signalisierungsprogramm 100 über die Meldungsschnittstelle 120 zum Verbindungsprogramm 110 übertragen werden, so erzeugt das Signalisierungsprogramm einen Meldungsblock, der, wie unten an Hand der Figur 4 noch erläutert, in einem vorher festgelegten Speicherbereich im Speicher 76 der Anschlußeinheit 12 gespeichert wird, vgl. Pfeil 122. Anschließend benachrichtigt das Signalisierungsprogramm 100 das Betriebssystem BS vom Erzeugen des Meldungsblocks, vgl. Pfeil 124. Das Betriebssystem steuert den Ablauf der Anwendungsprogramme 100 bis 114. An der durch den Pfeil 124 angedeuteten Nachricht erkennt das Betriebssystem BS, daß das Signalisierungsprogramm 100 einen Meldungsblock für das zugehörige Verbindungsprogramm 110 erzeugt hat. Demzufolge veranlaßt das Betriebssystem BS, daß nunmehr das Verbindungsprogramm 110 abgearbeitet wird, vgl. Pfeil 126. Beim Abarbeiten des Verbindungsprogramms 110 wird der im Speicher gespeicherte Meldungsblock gelesen, vgl. Pfeil 128. Die im Meldungsblock enthaltene Nachricht wird vom Verbindungsprogramm 110 bearbeitet. Danach ist wieder ein vorgegebener Zustand beim Abarbeiten des Verbindungsprogramms 110 erreicht. Das Verbindungsprogramm 110 wartet dann auf einen neuen Anreiz. Dieser Anreiz kommt beispielsweise von der Seite des Teilnehmers TlnBl, woraufhin vom Betriebssystem BS die Ausführung des Verbindungsprogramms 110 erneut veranlaßt wird.

Sind beim Abarbeiten des Verbindungsprogramms 110 Nachrichten oder Daten an das Signalisierungsprogramm 100 zu übergeben, so wird ebenfalls die Meldungsschnittstelle 120 benutzt. Dazu wird wiederum ein Meldungsblock verwendet, der im Speicher gespeichert wird, vgl. Pfeil 130. Danach benachrichtigt das Verbindungsprogramm 110 das Betriebssystem BS über das Erzeugen des Meldungsblocks, vgl. Pfeil 132. Das Betriebssystem BS veranlaßt, daß das zugehörige Signalisierungsprogramm 100 erneut gestartet wird, vgl. Pfeil 134. Beim Abarbeiten des Signalisierungsprogramms 134 wird dann der vom Verbindungsprogramm 110 erzeugte Meldungsblock gelesen, vgl. Pfeil 136. Der Aufbau eines Meldungsblocks wird weiter unten an Hand der Figur 4 genauer erläutert.

Beim Beispiel nach Figur 3 wird eine weitere Verbindung zwischen einem an der Anschlußbaugruppe 52 angeschlossenen Teilnehmer TlnA2 und einem Teilnehmer TlnB2 durch den Teilnehmer TlnA2 veranlaßt. Bei der Verbindung zwischen dem Teilnehmer TlnA2 und dem Teilnehmer TlnB2 wird zur Signalisierung gemäß dem Protokoll P2 das Signalisierungsprogramm 102 verwendet. Beim Abarbeiten dieses Signalisierungsprogramms 102 wird die Anschlußbaugruppe 52 angesteuert. Somit unterscheiden sich die Signalisierungsprogramme 100 und 102, weil sie schaltungstechnische Komponenten ansteuern, die Signale gemäß verschiedener Protokolle P1 und P2 erzeugen.

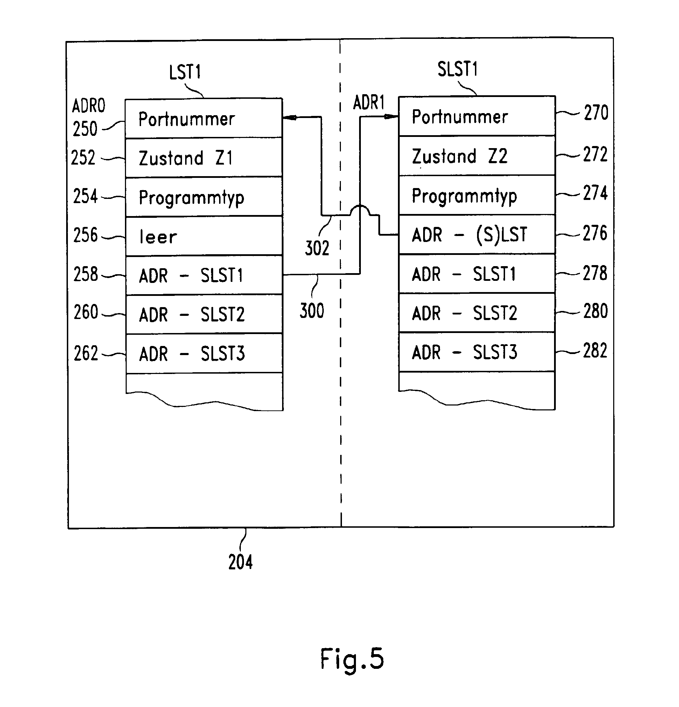

Außerdem wird für die Verbindung der Teilnehmer TlnA2 und TlnB2 das Verbindungsprogramm 112 für die Verbindungssteuerung verwendet. Die Verbindungssteuerung ist unabhängig vom verwendeten Signalisierungsprotokoll P1 bzw. P2, so daß dasselbe Verbindungsprogramm für die Verbindungen 110 und 112 eingesetzt wird. Jedoch handelt es sich um verschiedene Inkarnationen, zu denen jeweils der zuletzt ausgeführte Bearbeitungsschritt gespeichert wird. Für die Verbindungsprogramme 110 und 112 gibt es nur eine einzige Befehlsfolge im Speicher der Anschlußeinheit 12. Jedem Verbindungsprogramm 110 bzw. 112 wird eine gedachte Schnittstelle zugeordnet, zu der ein Verbindungsdatensatz SLST gehört. Die Datenfelder eines Verbindungsdatensätze SLST werden anhand der Figur 5 unten noch genauer erläutert. An Hand der zu dem Verbindungsprogramm 110 bzw. 112 gehörenden Verbindungsdatensätze SLST kann der letzte Bearbeitungszustand festgestellt werden und die Bearbeitung in diesem Zustand fortgesetzt werden.

Beim Austausch von Nachrichten zwischen dem Signalisierungsprogramm 102 und dem zugehörigen Verbindungsprogramm 112 wird wiederum die Meldungsschnittstelle 120 verwendet, vgl. Pfeile 138 bis 144. Der Austausch von Meldungsblöcken erfolgt beim Abarbeiten des Signalisierungsprogramms 102 bzw. des Verbindungsprogramms 112 auf die gleiche Art und Weise, wie oben für das Signalisierungsprogramm 100 und das Verbindungsprogramm 110 erläutert. Obwohl in Figur 3 nicht dargestellt, wird auch beim Austausch von Meldungsblöcken zwischen dem Signalisierungsprogramm 102 und dem Verbindungsprogramm 112 das Betriebssystem BS mit einbezogen.

In Figur 3 ist außerdem eine Verbindung zwischen einem Teilnehmer TlnA3 und einem Teilnehmer TlnB3 dargestellt, die vom Teilnehmer TlnA3 an der Vermittlungsstelle 26, vgl. Figur 1, veranlaßt worden ist, wobei der Teilnehmer TlnB3 an der Konzentratoreinheit 20 angeschlossen ist. Für die Verbindung der Teilnehmer TlnA3 und TlnB3 werden das Signalisierungsprogramm 104 und das Verbindungsprogramm 114 verwendet. Das Verbindungsprogramm 114 unterscheidet sich vom Verbindungsprogramm 110 bzw. 112, weil die Verbindungssteuerung auf der gerufenen B-Seite anders durchzuführen ist, als die Signalisierung auf der rufenden A-Seite. Das Signalisierungsprogramm 104 enthält dagegen die gleichen Befehlsfolgen wie das Signalisierungsprogramm 100, weil beide Signalisierungsprogramme 100 und 104 nach dem gleichen Protokoll P1 arbeiten und das Protokoll P1 ein sogenanntes doppelt gerichtetes Protokoll ist, das in Richtung zum rufenden A-Teilnehmer genauso arbeitet wie in Richtung zum gerufenen B-Teilnehmer. Beim Austausch von Meldungsblöcken zwischen dem Verbindungsprogramm 104 und dem Signalisierungsprogramm 114 wird die Meldungsschnittstelle 120 verwendet, vgl. Pfeile 146 bis 152, wobei das Betriebssystem BS einbezogen wird.

Die Signalisierungsprogramme 100 und 102 sind Inkarnationen des gleichen Programms. Das bedeutet, daß beim Ausführen des Signalisierungsprogramms 100 und des Signalisierungsprogramms 102 dieselbe Befehlsfolge verwendet wird, die somit im Speicher 76 nur einmal gespeichert werden muß. Dies ist möglich, weil der Zustand des jeweiligen Signalisierungsprogramms, das heißt beispielsweise der zuletzt ausgeführte Bearbeitungsschritt, in den entsprechenden Signalisierungsdatensätzen LST vermerkt wird. Die Datenfelder eines Signalisierungsdatensatzes LST werden unten anhand der Figur 5 erläutert.

Figur 4 zeigt ein Beispiel für einen Meldungsblock 200 und einen zugehörigen Datenblock 202, die in einem Speicher 204 der Anschlußeinheit 12 gespeichert sind. Der Meldungsblock 200 enthält ein Empfängeradreßfeld 206, ein Datenadreßfeld 208, ein Meldungskennzeichenfeld 210, ein Senderkennzeichenfeld 212 und ein Senderadreßfeld 214. Im Empfängeradreßfeld 206 ist die Adresse des Signalisierungsprogramms 100 bis 104 bzw. des Verbindungsprogramms 110 bis 114 gespeichert, für das der Meldungsblock 200 bestimmt ist. An Hand der Empfängeradresse im Empfängeradreßfeld 206 bestimmt das Betriebssystem BS das Anwendungsprogramm 100 bis 114, welches den Meldungsblock 200 bearbeiten soll.

Im Datenadreßfeld 208 ist die Adresse eines ersten Datenfeldes 220 des Datenblocks 202 enthalten. Beim Bearbeiten des Meldungsblocks 200 kann an Hand der Datenadresse 208 auf den Datenblock 202 zugegriffen werden, vgl. Pfeil 216.

Im Meldungskennzeichenfeld 210 wird die Art der im Meldungsblock 200 enthaltenen Meldung angegeben. Somit kann die Bearbeitung des Meldungsblocks 200 abhängig vom Typ der Meldung durchgeführt werden.

Im Senderkennzeichenfeld 212 ist das Kennzeichen des Anwendungsprogramms 100 bis 114 vermerkt, das den Meldungsblock 200 erzeugt hat. Im Senderadreßfeld 214 ist die Adresse des Anwendungsprogramms 100 bis 114 vermerkt, welches den Meldungsblock 200 erzeugt hat. Die Datenfelder 212 und 214 werden gegebenenfalls bei der Bearbeitung des Meldungsblocks 200 ausgewertet.

Der Datenblock 202 enthält neben dem ersten Datenfeld 220 weitere Datenfelder 222, 224 usw., in denen zu übermittelnde Daten gespeichert sind. Im Datenfeld 220 ist wie auch im Datenfeld 214 die Adresse desjenigen Anwendungsprogramms 100 bis 114 gespeichert, welches den Datenblock 202 erzeugt hat.

In einem anderen, nicht dargestellten Ausführungsbeispiel sind im Meldungsblock 200 bzw. im Datenblock 202 andere bzw. zusätzliche Datenfelder vorhanden.

Figur 5 zeigt die Datenfelder eines Signalisierungsdatensatzes LST1 und eines Verbindungsdatensatzes SLST1. Der Signalisierungsdatensatz LST1 belegt aufeinanderfolgende Speicherzellen 250 bis 262 beginnend ab einer Adresse ADR0 im Speicher 204. Der Verbindungsdatensatz SLST1 belegt aufeinanderfolgende Speicherzellen 270 bis 282 im Speicher 204 beginnend ab einer Adresse ADR1. Somit belegen die Daten des Signalisierungsdatensatzes LST1 bzw. des Verbindungsdatensatzes SLST1 jeweils einen Speicherblock des Speichers 204.

Auf die Daten des Signalisierungsdatensatzes LST1 wird vom Signalisierungsprogramm 100 zugegriffen, so daß der Signalisierungsdatensatz LST1 zu dem Signalisierungsprogramm 100 gehört. Jeder Signalisierungsdatensatz gehört zu einer physikalisch vorhandenen Schnittstelle eines Teilnehmers, zum Beispiel zu einem Sprachkanal. Eine vorgegebene Nummer für diese Schnittstelle wird in der Speicherzelle 250 des Signalisierungsdatensatzes LST1 vermerkt. In der Speicherzelle 252 wird in einem Zustandsdatum Z1 der Zustand vermerkt, in welchem sich das Signalisierungsprogramm 100 befindet. Anhand des Wertes des Zustandsdatums Z1 kann somit jederzeit nach einer Unterbrechung der letzte Zustand ermittelt und die Bearbeitung in diesem Zustand wieder aufgenommen werden. In der Speicherzelle 254 wird der Programmtyp des Programms gespeichert, das auf den Signalisierungsdatensatz LST1 zugreift, das heißt der Typ des Signalisierungsprogramms 100.

Die Speicherzelle 256 enthält im Signalisierungsdatensatz LST1 kein gültiges Datum. Diese Speicherzelle 256 ist jedoch erforderlich, um zu gewährleisten, daß Signalisierungsdatensatz LST1 und Verbindungsdatensatz SLST1 gleich aufgebaut sind. In der Speicherzelle 258 ist ein Verweisdatum ADR-SLST1 gespeichert, das den Wert der Adresse ADR1 hat und somit auf den Beginn des Verbindungsdatensatzes SLST1 verweist, vergleiche auch Pfeil 300. Das Signalisierungsprogramm 100 kann anhand dieses Verweises den Verbindungsdatensatz SLST1 ermitteln, der zu dem Verbindungsprogramm 110 gehört, mit dem das Signalisierungsprogramm 100 zusammenarbeitet.

In den Speicherzellen 260 und 262 können weitere Verweise auf Verbindungsdatensätze gespeichert werden. Im Ausführungsbeispiel gemäß Figur 5 sind jedoch keine weiteren Verweise in den Speicherzellen 260 und 262 gespeichert.

Dem Verbindungsdatensatz SLST 1 ist, wie oben bereits erwähnt, eine gedachte Schnittstelle zugeordnet. Diese Schnittstelle hat keine physikalische Bedeutung. Das Verwenden von gedachten Schnittstellen führt dazu, daß die Verbindungsdatensätze SLST im wesentlichen wie die Signalisierungsdatensätze LST aufgebaut sein können und daß außerdem der Zugriff auf die Verbindungsdatensätze SLST durch die Verbindungsprogramme auf ähnliche Art erfolgt wie der Zugriff der Signalisierungsprogramme auf die Signalisierungsdatensätze LST. In der Speicherzelle 270 ist die Nummer einer gedachten Schnittstelle gespeichert, die dem Verbindungsprogramm 110 zugeordnet ist. In der Speicherzelle 272 ist in einem Zustandsdatum Z2 der Zustand gespeichert, in dem sich das Verbindungsprogramm 110 befindet. Beim Ausführen de Verbindungsprogramms 110 wird der Wert des Zustandsdatums Z2 aktualisiert, so daß nach einer Unterbrechung die Bearbeitung wieder im letzten Zustand aufgenommen werden kann. In der Speicherzelle 274 ist der Programmtyp des auf den Verbindungsdatensatz SLST1 zugreifenden Verbindungsprogramms 110 gespeichert. Abhängig vom Programmtyp werden Meldungen über die Meldungsschnittstelle gesendet.

In der Speicherzelle 276 ist ein Verweisdatum ADR-(S)LST gespeichert, dessen Wert die Adresse ADR0 ist. Somit verweist das Verweisdatum ADR-(S)LST auf den Beginn des Signalisierungsdatensatzes LST1, vergleiche Pfeil 302.

In den Speicherzellen 278 bis 282 können Verweise auf weitere Verbindungsdatensätze SLST gespeichert werden. Im Ausführungsbeispiel gemäß Figur 5 sind in den Speicherzellen 278 bis 282 keine Verweise gespeichert.

Wie durch Pfeile 300 und 302 ersichtlich, gibt es gegenseitige Verweise im Signalisierungsdatensatz LST1 und im Verbindungsdatensatz SLST1. Diese Verweise sind zulässig, sofern die Zustandsdaten Z1, Z2 einen Wert haben, der einen Zustand angibt, der sich vom Ruhezustand unterscheidet. Im Ruhezustand werden das Signalisierungsprogramm 100 und das Verbindungsprogramm 110 nicht abgearbeitet.

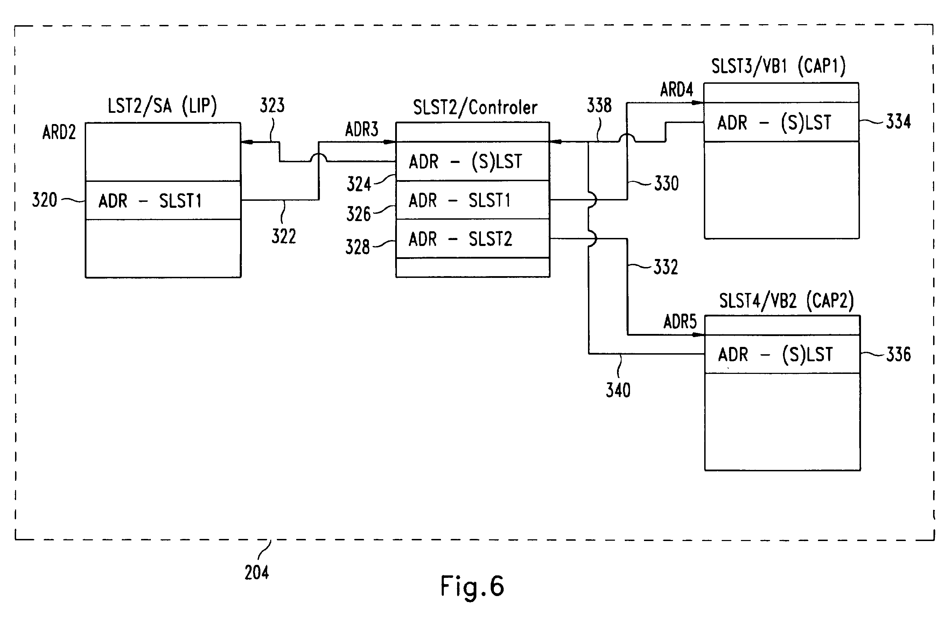

Figur 6 zeigt die Verkettung eines Signalisierungsdatensatzes LST2 und dreier Verbindungsdatensätze SLST2, SLST3 und SLST4, wie sie bei einer sogenannten Dreierkonferenzschaltung auftritt, bei der drei Teilnehmer gleichzeitig sprechen können. Die Datensätze LST2, SLST2, SLST3 und SLST4 sind wiederum im Speicher 204 gespeichert. Der Signalisierungsdatensatz LST2 ist beginnend ab einer Adresse ADR2 gespeichert und ist wie der Signalisierungsdatensatz LST1 aufgebaut, vgl. Figur 5. In Figur 6 wird aus Gründen der besseren Übersicht jedoch nur das Verweisdatum ADR-SLST1 des Signalisierungsdatensatzes LST2 in einer Speicherzelle 320 dargestellt. Ein Signalisierungsprogramm SA für die A-seitige-Verbindung greift auf die Daten des Signalisierungsdatensatzes LST2 zu. Das Signalisierungsprogramm SA trägt als Wert des Verweisdatums ADR-SLST1 den Wert einer Adresse ADR3 ein, an dem der Verbindungsdatensatz SLST2 im Speicher 204 beginnt, vgl. Pfeil 322.

Der Verbindungsdatensatz SLST2 ist wie der Verbindungsdatensatz SLST1 aufgebaut, vgl. Figur 5. Jedoch sind in Figur 6 nur drei Speicherzellen 324 bis 328 des Verbindungsdatensatzes SLST2 dargestellt. In der Speicherzelle 324 ist ein Verweisdatum ADR-(S)LST gespeichert, dessen Wert mit der Adresse ADR2 übereinstimmt, d.h. mit dem Beginn des Signalisierungsdatensatzes LST2, vgl. Pfeil 325. Die Daten des Verbindungsdatensatzes SLST2 werden von einem Steuerprogramm verwendet, das die Verbindungssteuerung während der Dreierkonferenzschaltung übernimmt. Dieses Steuerprogramm trägt außer dem Verweisdatum ADR-(S)LST zwei weitere Verweisdaten ADR-SLST1 bzw. ADR-SLST2 in die Speicherzelle 326 bzw. 328 ein. Der Wert des Verweisdatums ADR-SLST1 stimmt mit dem Wert einer Adresse ADR4 überein, an welcher der Verbindungsdatensatz SLST3 beginnt. Der Wert des Verweisdatums ADR-SLST2 stimmt mit dem Wert einer Adresse ADR5 überein, an welcher der Verweisdatensatz SLST4 beginnt, vgl. Pfeile 330 und 332.

Die Verweisdatensätze SLST3 und SLST4 sind wie der an Hand der Figur 5 erläuterte Verweisdatensatz SLST1 aufgebaut. Jedoch wird in Figur 6 nur jeweils ein Verweisdatum ADR-(S)LST in einer Speicherzelle 334 des Verweisdatensatzes SLST3 bzw. in einer Speicherzelle 336 des Verbindungsdatensatzes SLST4 gezeigt.

Der Verweisdatensatz SLST3 wird von einem Verbindungsprogramm VB1 genutzt, das die Verbindung zu einem ersten B-seitigen Teilnehmer steuert, der an der Dreierkonferenz teilnimmt. Das Verbindungsprogramm VB1 trägt als Wert des Verweisdatums ADR-(S)LST die Adresse ADR3 in die Speicherzelle 334 ein, so daß das Verweisdatum ADR-(S)LST auf den Beginn des Verbindungsdatensatzes SLST2 verweist, vgl. Pfeil 338.

Der Verbindungsdatensatz SLST4 wird von einem Verbindungsprogramm VB2 genutzt, das die Verbindung zu einem zweiten B-seitigen Teilnehmer der Dreierkonferenz steuert. Das Verbindungsprogramm VB3 trägt in die Speicherzelle 336 als Wert des Verweisdatums ADR-(S)LST ebenfalls den Wert der Adresse ADR3 ein. Damit verweist auch das Verweisdatum ADR-(S)LST des Verbindungsdatensatzes SLST4 auf den Beginn des Verbindungsdatensatzes SLST2, vgl. Pfeil 340.

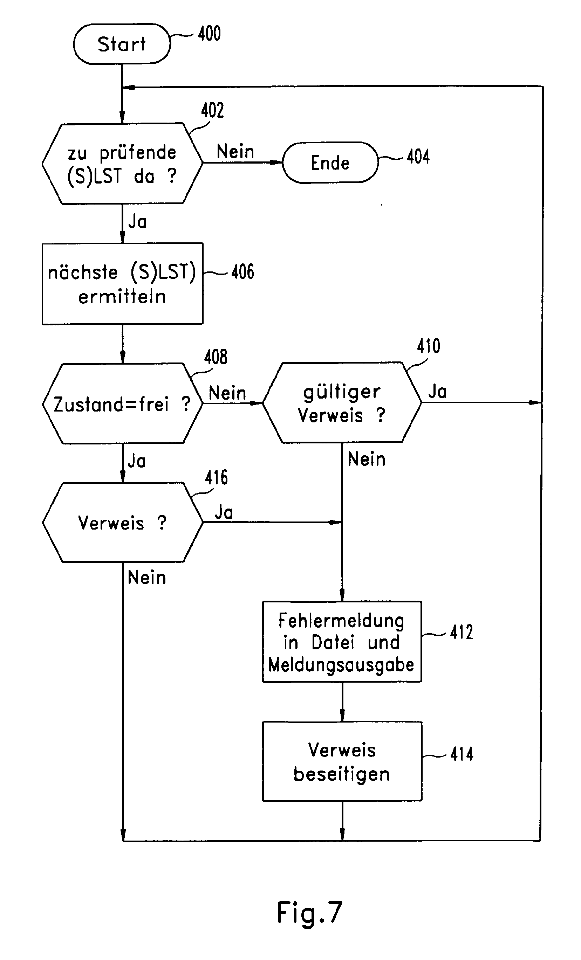

Beim fehlerfreien Betrieb der Vermittlungsstelle sind die durch die Pfeile 322, 325, 330, 332, 338 und 340 angedeuteten Verweise so wie in Figur 6 dargestellt. Jedoch können durch Fehler fehlerhafte Verweise auftreten. An Hand der Figur 7 wird unten erläutert, wie die Verweise überprüft werden können. Dies ist insbesondere dann von Bedeutung, wenn bei anderen Dienstleistungsmerkmalen der Vermittlungsstelle noch mehr Verweise als bei einer Dreierkonferenz benötigt werden.

Figur 7 zeigt ein Flußdiagramm mit Verfahrensschritten zum Überprüfen der Verweise in Signalisierungsdatensätzen LST und in Verbindungsdatensätzen SLST. Das Verfahren beginnt in einem Schritt 400, an den sich ein Schritt 402 anschließt, in welchem ermittelt wird, ob noch ein weiterer zu überprüfender Datensatz vorhanden ist. Ist dies nicht der Fall, d.h. alle Signalisierungsdatensätze LST und alle Verbindungsdatensätze SLST im Speicher 204 sind bereits überprüft worden, so wird das Verfahren in einem Schritt 404 beendet. Wird dagegen im Verfahrensschritt 402 festgestellt, daß noch weitere zu prüfende Datensätze vorhanden sind, so folgt unmittelbar nach dem Verfahrensschritt 402 ein Verfahrensschritt 406.

Im Verfahrensschritt 406 wird gemäß einer vorgegebenen Reihenfolge der nächste Signalisierungsdatensatz LST bzw. Verbindungsdatensatz SLST ermittelt. Anschließend folgt ein Verfahrensschritt 408.

Im Verfahrensschritt 408 wird an Hand des Zustandsdatums im bearbeiteten Datensatz LST bzw. SLST festgestellt, ob sich das zugehörige Signalisierungsprogramm bzw. Verbindungsprogramm im Ruhezustand befindet. Ist dies nicht der Fall, so folgt nach dem Verfahrensschritt 408 ein Verfahrensschritt 410, in welchem geprüft wird, ob der Verweis im bearbeiteten Datensatz auf den Beginn eines anderen Signalisierungsdatensatzes bzw. Verweisdatensatzes zeigt. Ist dies der Fall, so folgt unmittelbar nach dem Verfahrensschritt 410 wieder der Verfahrensschritt 402. Das Verfahren befindet sich in einer Schleife aus den Verfahrensschritten 402 bis 410.

Die Schleife aus den Verfahrensschritten 402 bis 410 wird im Schritt 410 verlassen, wenn dort festgestellt wird, daß kein gültiger Verweis im Signalisierungs- bzw. Verbindungsdatensatz vorhanden ist, obwohl sich das zu diesem Datensatz gehörende Programm nicht im Ruhezustand befindet. In diesem Fall folgt unmittelbar nach dem Verfahrensschritt 410 ein Verfahrensschritt 412, in welchem in eine Fehlerdatei eine Fehlermeldung geschrieben wird. Außerdem wird die Fehlermeldung auch auf einem Drucker oder einem Kontrollbildschirm angegeben. Diese Fehlermeldung kann später vom Wartungspersonal ausgewertet werden. An den Verfahrensschritt 412 schließt sich ein Verfahrensschritt 414 an, in welchem der ungültige Verweis beseitigt wird. Nach dem Verfahrensschritt 414 folgt wieder Verfahrensschritt 402.

Die Schleife aus den Verfahrensschritten 402 bis 410 wird auch im Verfahrensschritt 408 verlassen, wenn festgestellt wird, daß sich das zum gerade geprüften Signalisierungsdatensatz LST bzw. Verbindungsdatensatz SLST gehörende Signalisierungsprogramm bzw. Verbindungsprogramm im Ruhezustand befindet. In einem solchen Fall folgt unmittelbar nach dem Verfahrensschritt 408 ein Verfahrensschritt 416. Im Verfahrensschritt 416 wird geprüft, ob das Verweisdatum einen Wert ungleich Null hat. Ist dies der Fall, so liegt auch im Ruhezustand ein Verweis vor. Dies ist jedoch ein Fehlerfall, so daß nach dem Schritt 416 die Verfahrensschritte 412 und 414 ausgeführt werden, um eine Fehlermeldung in die Datei zu schreiben und den Verweis dadurch zu beseitigen, daß das Verweisdatum den Wert Null erhält. Nach dem Verfahrensschritt 414 wird der Verfahrensschritt 402 ausgeführt.

Wird im Verfahrensschritt 416 dagegen festgestellt, daß das Verweisdatum den Wert Null hat, so folgt unmittelbar nach dem Verfahrensschritt 416 der Verfahrensschritt 402, weil im Ruhezustand das Verweisdatum den Wert Null haben muß und somit kein Fehlerfall vorliegt.

Die in Figur 7 gezeigten Verfahrensschritte werden beispielsweise beim Ausführen eines Prüfprogramms mit Hilfe eines Mikroprozessors ausgeführt.

## Patentansprüche

1. Verfahren zum Überprüfen einer Vermittlungsstelle (10),
bei dem in einer Speichereinheit (204) der Vermittlungsstelle (10) mindestens ein Signalisierungsdatensatz (LST1) gespeichert ist, auf den ein Signalisierungsprogramm (100) zur Signalisierung für einen ersten Teilnehmer (TlnA1) zugreift,
der Signalisierungsdatensatz (LST1) ein Zustandsdatum (Z1) enthält, das den Betriebszustand des zugreifenden Signalisierungsprogramms (100) angibt,
in der Speichereinheit (204) der Vermittlungsstelle mindestens ein Verbindungsdatensatz (SLST1, SLST2) gespeichert ist, auf den ein Verbindungsprogramm (110) zur Verbindungssteuerung für den ersten Teilnehmer (TlnA1) bei der Verbindung mit mindestens einem zweiten Teilnehmer (TlnB1) zugreift,
der Signalisierungsdatensatz (LST1) mindestens ein Verweisdatum (ADR-SLST1) enthält, das auf den Verbindungsdatensatz (SLST1, SLST2) verweist,
und bei dem ein Prozessor mit den Daten des Signalisierungsdatensatzes (LST1) die folgenden Schritte ausführt:
aus dem Zustandsdatum (Z1) wird der Betriebszustand ermittelt (Schritt 408),
das Verweisdatum (ADR-SLST1) wird gelesen (Schritt 410, 416),
falls das Verweisdatum (ADR-SLST1) einen für den ermittelten Betriebszustand unzulässigen Wert hat, wird eine Fehlerbehandlung (Schritt 412, 414) durchgeführt.

2. Verfahren nach Anspruch 1,
**dadurch gekennzeichnet**,
daß die Schritte beim Abarbeiten eines Überprüfungsprogramms durchgeführt werden, das nicht Bestandteil des Signalisierungsprogramms (100) oder des Verbindungsprogramms (110) ist.

3. Verfahren nach einem der vorhergehenden Ansprüche,
**dadurch gekennzeichnet**,
daß der Verbindungsdatensatz (SLST1) ein Zustandsdatum (Z2) enthält, das den Zustand des zugehörigen Verbindungsprogramms angibt,
daß der Verbindungsdatensatz (SLST1) ein Verweisdatum (ADR-(S)LST) enthält, das auf den Signalisierungsdatensatz (LST1) oder einen anderen Verbindungsdatensatz verweist,
und daß der Prozessor die Schritte mit den Daten des Verbindungsdatensatzes ausführt.

4. Verfahren nach einem der vorhergehenden Ansprüche,
**dadurch gekennzeichnet**,
daß die Schritte für jeden Signalisierungsdatensatz und/oder Verbindungsdatensatz durchgeführt werden, vorzugsweise mit zyklischer Wiederholung.

5. Verfahren nach einem der vorhergehenden Ansprüche,
**dadurch gekennzeichnet,**
daß ein vorgegebener Wert des Zustandsdatums (Z1, Z2) einen Ruhezustand angibt, in welchem das zugreifende Programm nicht verwendet wird,
daß im Ruhezustand für das Verweisdatum nur ein vorgegebener Verweiswert (Null) zulässig ist, der angibt, daß kein Verweis vorliegt,
und daß vorzugsweise bei vom Ruhezustand abweichendem Betriebszustand nur Verweiswerte auf vorgegebene Speicherplätze (ADR0, ADR1) zulässig sind, vorzugsweise auf den Beginn eines Datensatzes.

6. Verfahren nach einem der vorhergehenden Ansprüche,
**dadurch gekennzeichnet**,
daß bei der Fehlerbehandlung eine Fehlermeldung in eine Fehlerdatei eingetragen wird (Schritt 412).

7. Verfahren nach einem der vorhergehenden Ansprüche,
**dadurch gekennzeichnet,**
daß bei der Fehlerbehandlung ein zulässiges Verweisdatum in den Speicher (204) geschrieben wird (Schritt 414).

8. Anschlußeinheit (12) für eine Vermittlungsstelle (10), mit einer Speichereinheit (76, 204) und einem Prozessor (58), der die in einem der vorhergehenden Ansprüche angegebenen Schritte ausführt.

9. Vermittlungsstelle (10) **gekennzeichnet durch** eine Anschlußeinheit (12) nach Anspruch 8.

10. Computerprogramm mit einer durch einen Prozessor eines Computers ausführbaren Befehlsfolge,
**dadurch gekennzeichnet**,
daß der Computer beim Ausführen der Befehlsfolge veranlaßt wird, die Schritte nach einem der Ansprüche 1 bis 7 durchzuführen.
